# EUROPEAN PATENT APPLICATION

(11) **EP 2 249 414 A1**
(43) Date of publication of application: **10.11.2010**
(21) Application number: 09714482.8
(22) Date of filing: 20.02.2009
(51) Int. Cl.: H01M 2/10

(54) **CELL CONTAINER AND BATTERY**

(30) Priority: 29.02.2008 JP 2008051042
(71) Applicant: Mitsubishi Heavy Industries, Ltd., Tokyo 108-8215 (JP); Kyushu Electric Power Co., Inc., Fukuoka-shi, Fukuoka 810-8720 (JP)
(72) Inventor: YOSHIDA, Tadashi, Nagasaki-shi Nagasaki 851-0392 (JP); HASHIZAKI, Katsuo, Nagasaki-shi Nagasaki 850-8610 (JP); OHISHI, Masazumi, Nagasaki-shi Nagasaki 850-8610 (JP); NISHIDA, Takehiko, Nagasaki-shi Nagasaki 851-0392 (JP); KOBAYASHI, Katsuaki, Nagasaki-shi Nagasaki 851-0392 (JP); ADACHI, Kazuyuki, Fukuoka-shi Fukuoka 810-8720 (JP); MURAKAMI, Shinji, Fukuoka-shi Fukuoka 810-8720 (JP); WADA, Yoshihiro, Fukuoka-shi Fukuoka 810-8720 (JP); KURAYAMA, Kouji, Fukuoka-shi Fukuoka 810-8720 (JP)
(74) Representative: HOFFMANN EITLE
(86) International application number: PCT/JP2009/053037
(87) International publication number: WO 2009/107557

(57) **Abstract**

Disclosed is a cell container offering improved vibration resistance and improved shock resistance as well as maintaining the battery performance and ensuring the reliability. Specifically disclosed is a cell container comprising: an insulative case (31) in which a plurality of unit cells are placed side by side; insulative wall portions (34) for partitioning between the plurality of unit cells; and support projections (35) projecting from at least either one of the case (31) or the wall portions (34) toward the unit cells to support the unit cells.

## Description

### Technical Field

The present invention relates to a cell container and a battery pack, in particular, to a cell container and a battery pack suitable for use in deep ocean survey vehicles, electric cars, power storage systems, uninterruptible power supply systems, and like systems.

### Background Art

In general, lithium batteries, fuel cells, and such batteries are required to offer ensured reliability and safety for use in various applications. In particular, when used in a mobile object such as a deep ocean research vehicle and an electric car, these batteries have to pass a drop test, a vibration test, a shock test, and such tests to verify their adequacy fulfilling the prescribed standard.

Furthermore, if a short-circuit occurs in an electrode when the battery is charged, an internal short-circuit current may cause heat generation within the battery, by which a high temperature gas may brow out and the battery may be broken. Or, even if the internal short-circuit current is not very serious, the condition is still bad as the battery can not offer ensured reliability because the battery performance is unable to improve and such reasons.

For this reason, in prior art, various techniques have been proposed to prevent such a bad condition by protecting the battery from shocks and vibrations (for example, refer to Patent Citations 1 and 2).
Patent Citation 1:
   Japanese Unexamined Patent Application, Publication No. 2006-147531
Patent Citation 2:
   Japanese Unexamined Patent Application, Publication No. 2006-339031

### Disclosure of Invention

In the battery pack described in Patent Citation 1, battery modules are protected from shocks and vibrations by arranging an elastic member between these battery modules.
In the battery pack of unit cells described in Patent Citation 2, the unit cells are protected from shocks and vibrations by stacking these cells and pressing the opposite end surfaces of the stacked cells with a predetermined pressure.

In these methods, the battery pack can be protected from shocks and vibrations, whereas it is necessary to maintain a certain area of the contact surface between the battery module and the elastic member, or to tightly stick the unit cells together. Therefore, these methods are problematic as it is difficult for the heat generated from the battery to radiate to the outside.
Therefore, as described above, these batteries are problematic in that the heat generation causes the performance deterioration.

Furthermore, since there is no secured insulation between the battery modules, or between the unit cells, it is necessary to provide each of the battery modules, or each of the unit cells, with an insulative layer to secure the insulation property.

The present invention was completed to solve the abovementioned problems, with an object of providing a cell container and a battery pack capable of offering improved vibration resistance and improved shock resistance as well as maintaining the battery performance and ensuring the reliability.

In order to achieve the abovementioned object, the present invention provides the following solutions.
A first aspect of the present invention is a cell container comprising: an insulative case in which a plurality of unit cells are placed side by side; an insulative wall portion for partitioning between the plurality of unit cells; and support projections projecting from at least either one of the case or the wall portion toward the unit cells to support the unit cells.

According to the first aspect mentioned above, the unit cells are supported by the support projections. Therefore, even if the battery pack is vibrated or shocked, the unit cells can be kept from vigorously vibrating or jumping up within the cell container.
Meanwhile, since the unit cells are supported by the support projections, clearances are formed between the unit cells and the case and between the unit cells and the wall portion. Then, heat generated in the unit cells can radiate into the thus formed clearances, and thereby the performance deterioration of the unit cells due to heat generation can be suppressed. Furthermore, heat propagation between adjacent unit cells can be inhibited by the clearance, and thereby the performance deterioration of the unit cells due to heat generation can be suppressed.
By making the case and the wall portions insulative, it is no longer necessary to form an insulative layer over the surfaces of the unit cells.

The first aspect may also comprise a controller for controlling at least the voltage of the plurality of unit cells at the time of charging or discharging, and the controller may be arranged between the plurality of unit cells while being inserted in a setup section that is partitioned from the unit cells by the wall portions.

According to the first aspect, by providing the setup section between the plurality of unit cells, the interval between the unit cells which sandwich the setup section is widened. Therefore, the heat propagation between these unit cells can be inhibited by the clearance, and thereby the performance deterioration of the unit cells due to heat generation can be suppressed.

In the first aspect, through holes may be provided at least in the case, for communicating between the outside of the case and a clearance formed between the unit cell and the case or the wall portion.

According to the first aspect, air ventilation can be secured between the clearance and the outside of the case via the through holes. Therefore, heat generated in the unit cells can more readily radiate as compared to the case without the through holes.

In the first aspect, the case may also have a structure comprising: a lower case into which the plurality of unit cells are placed from its opening; and an upper case which serves as a lid to close the opening.

According to this structure, since the upper case and the lower case are separated, the unit cells can be placed from the opening into the lower case. Furthermore, since the unit cells placed from the opening can be readily accessed, the maintenance of the unit cells and the like can be more readily done.

The abovementioned structure may also have a holddown member which comprises: an insertion portion to be inserted in a clearance formed between the case and the unit cell; an abutting portion which abuts against the upper case being fixed to the lower case; and a pressing portion to be pressed against the surface of the unit cell on the upper case side.

According to the abovementioned structure, by fixing the upper case to the lower case, the pressing portion is pressed down to the lower case via the abutting portion, and thereby the unit cell is pressed down to the lower case. Therefore, the unit cell can be more reliably kept from jumping up.
Furthermore, since the insertion portion of the holddown member is inserted into the clearance, the abutting portion abuts against a relatively rigid periphery portion of the upper case. Accordingly, the upper case will be less likely deformed, and the unit cells can be more reliably kept from jumping up.

In the abovementioned structure, the surface of the upper case on the lower case side may also have a raised portion which protrudes in a belt-like shape toward the unit cells placed in the lower case and which abuts against the unit cells.

According to the abovementioned structure, by fixing the upper case to the lower case, the raised portion abuts against the unit cells, and thereby the unit cells are pressed down to the lower case side. Therefore, the unit cells can be more reliably kept from jumping up.
Furthermore, since the upper case comprises the raised portion which protrudes in a belt-like shape, the rigidity of the upper case is improved as compared to the case without the raised portion. Accordingly, the upper case will be less likely deformed, and the unit cells can be more reliably kept from jumping up.

A second aspect of the present invention is a battery pack comprising the abovementioned cell container and a plurality of unit cells placed in the cell container.

According to the second aspect mentioned above, the unit cells are supported by the support projections. Therefore, even if the battery pack is vibrated or shocked, the unit cells can be kept from vigorously vibrating or jumping up within the cell container.
Meanwhile, since the unit cells are supported by the support projections, clearances are formed between the unit cells and the case and between the unit cells and the wall portions. Then, heat generated in the unit cells can radiate into the thus formed clearances. Therefore, the performance deterioration of the unit cells due to heat generation can be suppressed, and thereby the performance deterioration of the battery pack can be also suppressed.
By making the case and the wall portions insulative, it is no longer necessary to form an insulative layer over the surfaces of the unit cells.

According to the cell container and the battery pack of the present invention, the unit cells are supported by the support projections projecting from the insulative case and the wall portions toward the unit cells. Therefore, the cell container and the battery pack can offer effects of improving the vibration resistance and the shock resistance, as well as maintaining the battery performance and ensuring the reliability.

### Brief Description of Drawings

[FIG. 1] FIG. 1 is a side cross-sectional view which illustrates the structure of the battery pack according to a first embodiment of the present invention.
[FIG. 2] FIG. 2 is a top plan view which illustrates the inner structure of the battery pack of FIG. 1.
[FIG. 3] FIG. 3 is a side elevational view which illustrates the structure of the lower case in the cell container of FIG. 1.
[FIG. 4] FIG. 4 is a top plan view which illustrates the structure of the lower case of FIG. 3.
[FIG. 5] FIG. 5 is a cross-sectional view which illustrates the structure of the lower case of FIG. 4, taken along the line A-A.
[FIG. 6] FIG. 6 is a top plan view which illustrates the structure of the upper case in the cell container of FIG. 1.
[FIG. 7] FIG. 7 is a cross-sectional view which illustrates the structure of the upper case of FIG. 6, taken along the line B-B.
[FIG. 8] FIG. 8 is a side cross-sectional view which illustrates the structure of the battery pack according to a second embodiment of the present invention.
[FIG. 9] FIG. 9 is a top plan view which illustrates the inner structure of the battery pack of FIG. 8.
[FIG. 10] FIG. 10 is a partially enlarged view which illustrates the structure of the holddown member of FIG. 8.
[FIG. 11] FIG. 11 is a schematic diagram which illustrates the structure of the vicinity of the holddown member of FIG. 8.
[FIG. 12] FIG. 12 is a side cross-sectional view which illustrates the structure of the battery pack according to a third embodiment of the present invention.
[FIG. 13] FIG. 13 is a top plan view which illustrates the structure of the upper case in the cell container of FIG. 12.
[FIG. 14] FIG. 14 is a cross-sectional view which illustrates the structure of the upper case of FIG. 13, taken along the line C-C.
[FIG. 15] FIG. 15 is a side cross-sectional view which illustrates the structure of the battery pack according to a fourth embodiment of the present invention.
[FIG. 16] FIG. 16 is a top plan view which illustrates the inner structure of the battery pack of FIG. 15.
[FIG. 17] FIG. 17 is a side elevational view which illustrates the structure of the lower case in the battery pack according to a fifth embodiment of the present invention.
[FIG. 18] FIG. 18 is a top plan view which illustrates the structure of the lower case of FIG. 17.
[FIG. 19] FIG. 19 is a cross-sectional view which illustrates the structure of the lower case of FIG. 18, taken along the line D-D.
[FIG. 20] FIG. 20 is a top plan view which illustrates the structure of the upper case.
[FIG. 21] FIG. 21 is a top plan view which illustrates the structure of the lower case in the battery pack according to a sixth embodiment of the present invention.
[FIG. 22] FIG. 22 is a top plan view which illustrates the inner structure of the battery pack according to a seventh embodiment of the present invention.
[FIG. 23] FIG. 23 is a cross-sectional view which illustrates the inner structure of the battery pack of FIG. 22, taken along the line E-E.

### Explanation of Reference:

- 1, 101, 201, 301, 401, 501, 601:: Battery pack
- 2:: Unit cell
- 3:: Controller
- 4, 604:: Cell container
- 21, 421, 521, 621:: Lower case
- 22, 222, 422:: Upper case
- 31, 431, 531, 631:: Case mainframe (package)
- 33:: Controller chamber (setup section)
- 34, 434:: Wall portion
- 35, 535:: Side ribs (support projections)
- 105:: Holddown member
- 151:: Insertion portion
- 152:: Abutting portion
- 153:: Pressing portion
- 244:: Reinforcing rib (raised portion)
- 436:: Through hole

### Best Mode for Carrying Out the Invention

### First Embodiment

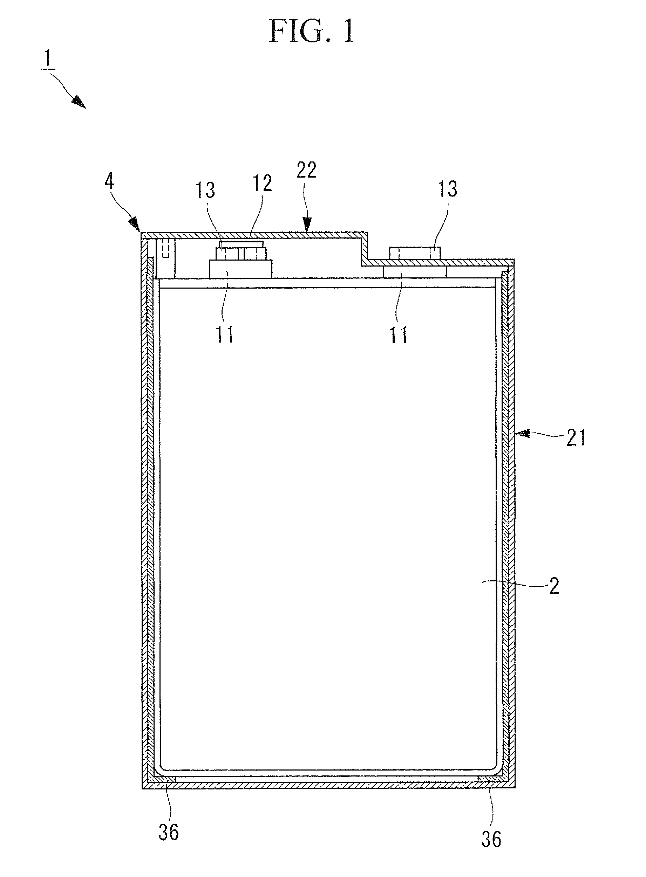

Hereunder is a description of the battery pack according to a first embodiment of the present invention, with reference to FIG. 1 through FIG. 6.

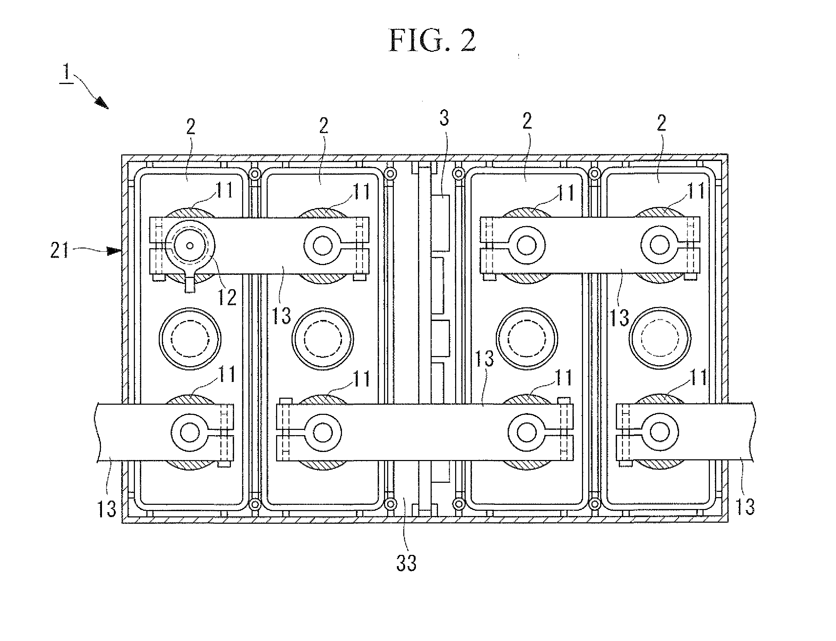

FIG. 1 is a side cross-sectional view which illustrates the structure of the battery pack according to this embodiment. FIG. 2 is a top plan view which illustrates the inner structure of the battery pack of FIG. 1.
The battery pack 1 of this embodiment is a battery pack comprising a plurality of unit cells 2 which are chargeable and dischargeable secondary cells. This battery pack 1 is used as a power source of a mobile object such as a deep ocean research vehicle and an electric car, or used for a power storage system, an uninterruptible power supply system, or such applications.

As shown in FIG. 1 and FIG. 2, the battery pack 1 comprises the unit cells 2 such as lithium ion secondary cells, a controller 3 for controlling the unit cells 2, and a cell container 4 in which the unit cells 2 and the controller 3 are placed.

The unit cell 2 is a secondary cell such as a lithium ion secondary cell formed in an approximately rectangular shape.
The unit cell 2 comprises positive and negative electrode terminals 11 each of which projects in a column shape upward from the top end surface of the unit cell 2 (toward the top of FIG. 1). The top end surface of each electrode terminal 11 is attached with a crimp terminal 12 which is in an approximately annular-plate-shape and is to be electrically connected to the controller 3, by a fastening member such as a screw. FIG. 1 and FIG. 2 show only one crimp terminal 12 for the purpose of easy understanding, and the rest crimp terminals 12 are not shown here.
Furthermore, as to the surface of the unit cell 2, a conductive surface of the box of the unit cell 2 is directly exposed.

The positive and negative electrode terminals 11 of adjacent unit cells 2 are electrically connected by a bus bar 13, which is a connecting bar made of a conductive material. The bus bar 13 is a plate-shaped member, in the vicinities of respective ends of which are provided a pair of through holes to insert the electrode terminals 11.
With this structure, the electrode terminals 11 are inserted in the through holes of the bus bar 13 before the crimp terminals 12 are attached to the electrode terminals 11. Therefore, the bus bar 13 can be kept from dropping off.

In this embodiment, the description is made with the example where four unit cells 2 are provided to the battery pack 1 and these unit cells 2 are serially connected. However, the number of the unit cells 2 may be greater or smaller than four, and is not specifically limited.

The controller 3 is to control the voltage or the like while monitoring the voltage and the temperature of the unit cells 2, when the battery pack 1 is being charged or discharged. The controller 3 is a control circuit formed on a substrate, and is inserted in a controller chamber 33 in the cell container 4.

The cell container 4 houses the unit cells 2, the controller 3, and the like, and defines the external shape of the battery pack 1.
As shown in FIG. 1, the cell container 4 comprises a lower case 21 in which the unit cells 2 and the controller 3 are placed, and an upper case 22 which serves as a lid.

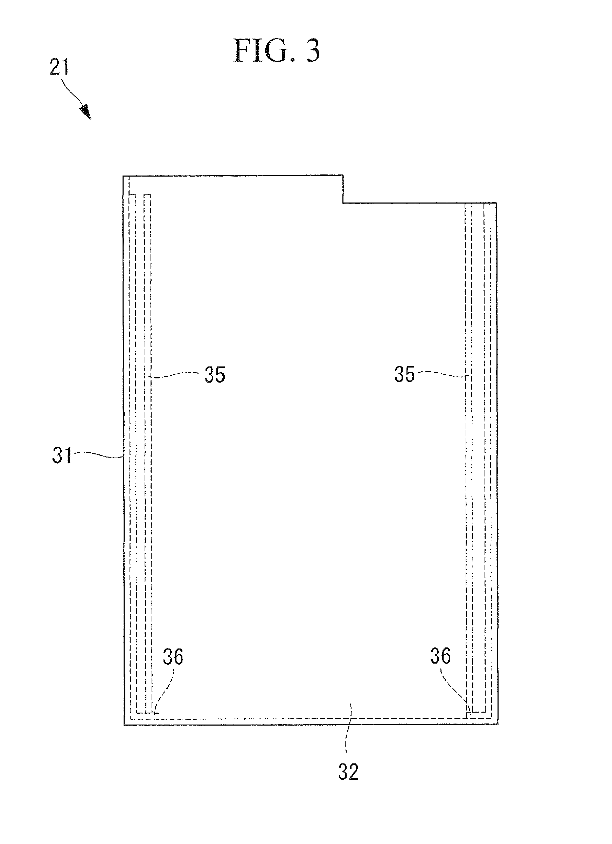

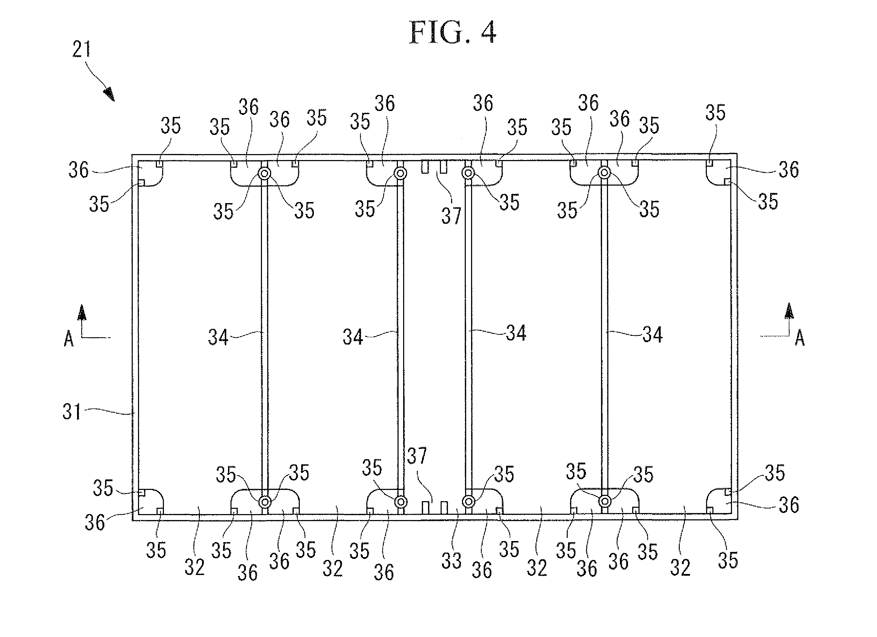

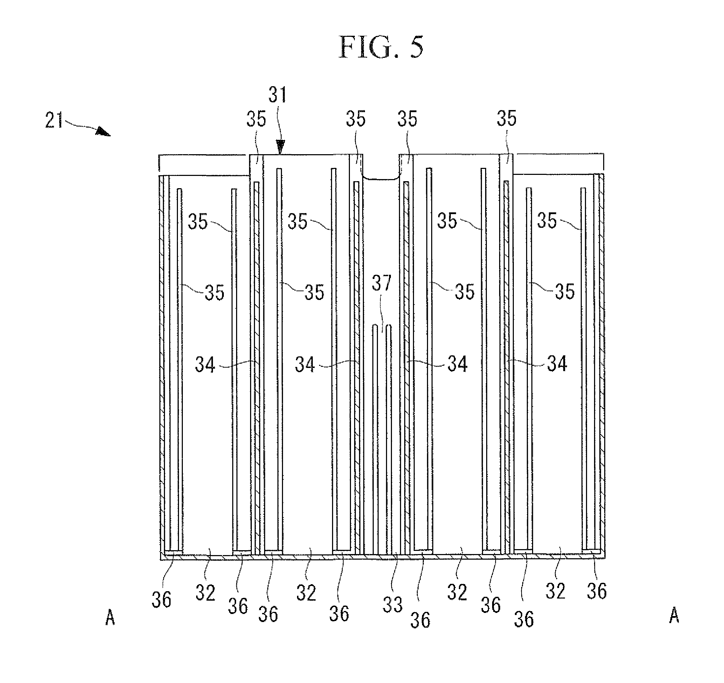

FIG. 3 is a side elevational view which illustrates the structure of the lower case in the cell container of FIG. 1. FIG. 4 is a top plan view which illustrates the structure of the lower case of FIG. 3. FIG. 5 is a cross-sectional view which illustrates the structure of the lower case of FIG. 4, taken along the line A-A.
The lower case 21 is formed of an insulative material such as a resin, and supports the unit cells 2 and the like.
As shown in FIG. 3 through FIG. 5, the lower case 21 comprises: a case mainframe (package) 31 which is in a rectangular tube shape with a closed bottom and an opened top; and wall portions 34 for partitioning the inside of the case mainframe 31 to define the unit cell chambers 32 and the controller chamber (setup section) 33 in which the unit cells 2 and the controller 3 are placed.

As shown in FIG. 3, the unit cell chambers 32 and the controller chamber 33 are aligned side by side, and the controller chamber 33 is sandwiched between the unit cell chambers 32. In other words, the controller chamber 33 is arranged in the center, and each two unit cell chambers 32 are respectively arranged on the opposite ends of the controller chamber 33.

with this structure, the interval between the unit cells 2 which sandwich the controller chamber 33 is widened. Therefore, the heat propagation between these unit cells 2 can be inhibited by this clearance. Therefore, the performance deterioration of the unit cells 2 due to heat generation can be suppressed.

As shown in FIG. 3 and FIG. 4, the unit cell chamber 32 comprises: side ribs (support projections) 35 for supporting the unit cell 2 from the side; and base portions 36 for supporting it from the bottom.

The side ribs 35 are ribs which project from the wall surfaces of the case mainframe 31 and the wall surfaces of the wall portions 34 in the vicinities of the corners of the unit cell chambers 32 toward the unit cells 2, and extend in the vertical direction. Furthermore, the side ribs 35 also form clearances between the unit cells 2 and the case mainframe 31, and between the unit cells 2 and the wall portions 34.
Of these side ribs 35, side ribs 35 provided on the wall portions 34 are formed in approximately cylindrical shapes, in the upper end portions of which are formed screw holes to fix the upper case 22.

The position to arrange the side ribs 35 is not specifically limited as long as the unit cells 2 can be supported. For example, it is possible to provide the side ribs 35 on both of the case mainframe 31 and the wall portions 34 in the vicinities of the corners as mentioned above, or it is also possible to provide them only on either one of the case mainframe 31 and the wall portions 34 in the vicinities of the corners.

The base portions 36 are plate-shaped members serving as bottoms in the vicinities of the corners of the unit cell chambers 32, and form clearances between the unit cells 2 and the bottom of the case mainframe 31.
With this structure, clearances are formed between the bottoms of the unit cells 2 and the bottoms of the unit cell chambers 32, and thereby heat generated in the unit cells 2 can readily radiate.

As shown in FIG. 4 and FIG. 5, on the wall surfaces of the case mainframe 31 within the controller chamber 33, a pair of insertion slits 37 for supporting the controller 3 are oppositely arranged.

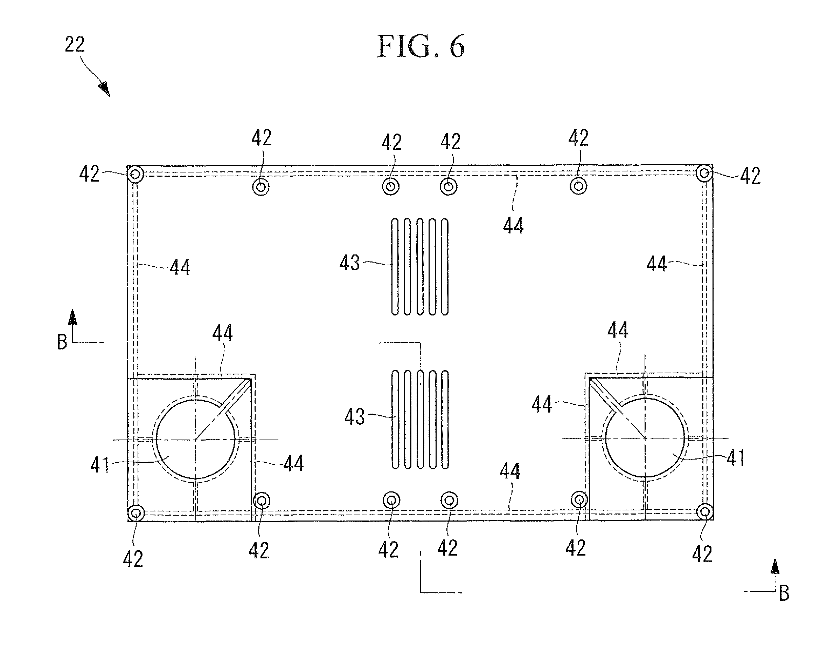

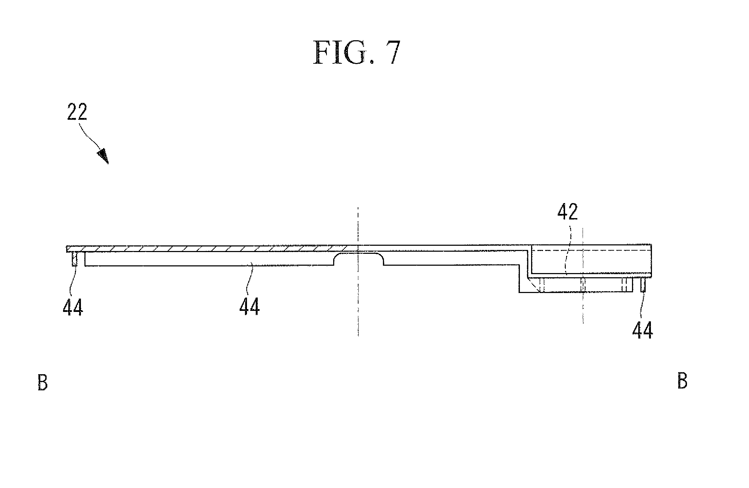

FIG. 6 is a top plan view which illustrates the structure of the upper case in the cell container of FIG. 1. FIG. 7 is a cross-sectional view which illustrates the structure of the upper case of FIG. 6, taken along the line B-B.
The upper case 22 is a lid which defines the external shape of the battery pack 1 by bering attached to the lower case 21, and is formed of an insulative material such as a resin.

As shown in FIG. 6 and FIG. 7, the upper case 22 comprises: a pair of apertures 41 for exposing the electrode terminals 11 of the unit cells 2; screw holes 42 for inserting fastening members such as screws which fix the upper case 22 to the lower case 21; vent holes 43 for communicating between the controller chamber 33 and the outside of the case; and a reinforcing rib 44 for ensuring the rigidity of the upper case 22.

Here is a description of the operation of the thus configured battery pack 1.
In the battery pack 1, while the upper case 22 and the lower case 21 are separated, the unit cells 2 are respectively inserted in the unit cell chambers 32 and are serially connected by using the bus bars 13. At the same time, the controller 3 is inserted in the controller chamber 33, and the electrode terminals 11 of the respective unit cells 2 and the controller 3 are electrically connected. Then, the lower case 21 is covered by the upper case 22, and the upper case 22 is fixed to the lower case 21 by fastening members such as screws.

With this structure, since the upper case 22 and the lower case 21 are separated, the unit cells 2 can be placed from the opening into the lower case 21. Furthermore, since the unit cells 2 placed from the opening can be readily accessed, the maintenance of the unit cells 2 and the like can be more readily done.

According to the abovementioned structure, the unit cells 2 are supported by the side ribs 35. Therefore, even if the battery pack 1 is vibrated or shocked, the unit cells 2 can be kept from vigorously vibrating or jumping up within the cell container 4.
Meanwhile, since the unit cells 2 are supported by the side ribs 35, clearances are formed between the unit cells 2 and the case mainframe 31 and between the unit cells 2 and the wall portions 34. Then, heat generated in the unit cells 2 can radiate into the thus formed clearances, and thereby the performance deterioration of the unit cells 2 due to heat generation can be suppressed. Furthermore, heat propagation between adjacent unit cells 2 can be inhibited by the clearance, and thereby the performance deterioration of the unit cells 2 due to heat generation can be suppressed.

Since the upper case 22, the lower case 21, and the wall portions 34 are formed of insulative material(s), it is no longer necessary to form an insulative layer over the surfaces of the unit cells 2. That is to say, since the wall portions 34 and the like can prevent a short-circuit between adjacent unit cells 2, or a short-circuit between the unit cells 2 and an external member, it becomes unnecessary to form an insulative layer over the surfaces of the unit cells 2.

### Second Embodiment

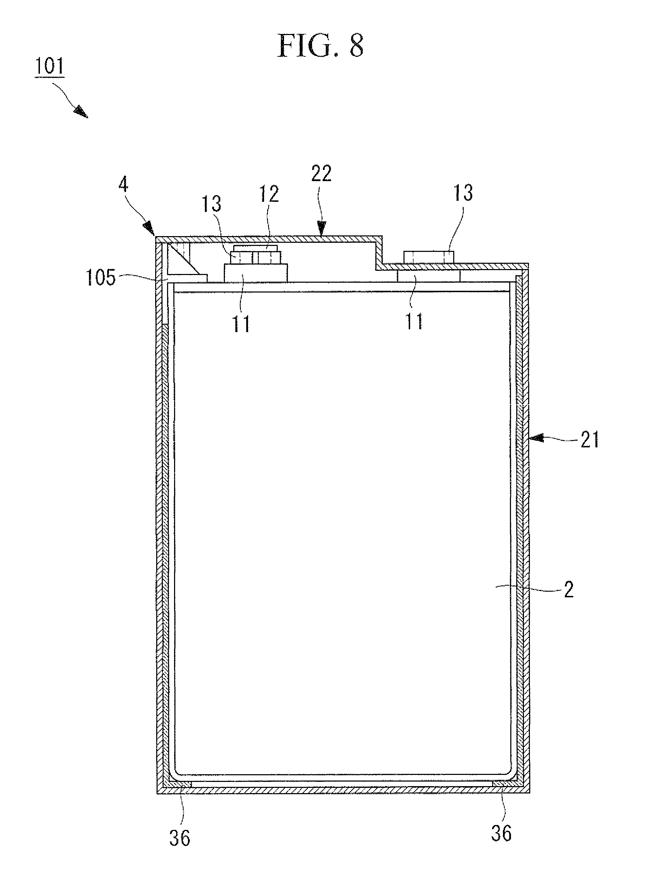

Next is a description of a second embodiment of the present invention with reference to FIG. 8 through FIG. 11.
The basic structure of the battery pack of this embodiment is the same as that of the first embodiment; however, this embodiment is different from the first embodiment regarding the method of fixing the unit cells. In this embodiment, therefore, the description is made only for the method of fixing the unit cells with reference to FIG. 8 through FIG. 11, and the description of other components is omitted.

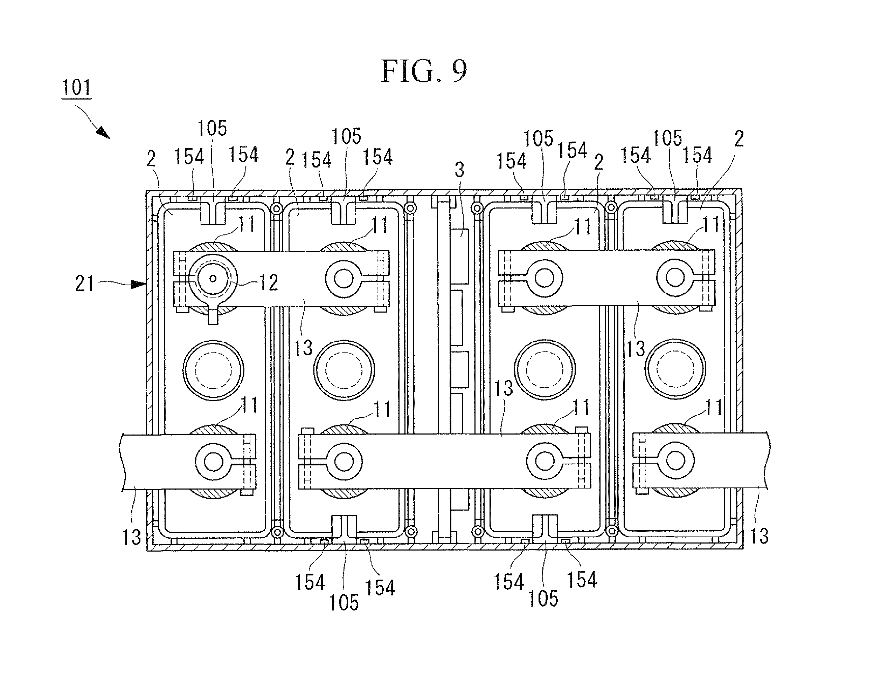

FIG. 8 is a side cross-sectional view which illustrates the structure of the battery pack according to this embodiment. FIG. 9 is a top plan view which illustrates the inner structure of the battery pack of FIG. 8.
The same reference symbols are used for components the same as those in the first embodiment, and the description thereof is omitted.

As shown in FIG. 8 and FIG. 9, the battery pack 101 comprises unit cells 2 such as lithium ion secondary cells, a controller 3 for controlling the unit cells 2, a cell container 4 in which the unit cells 2 and the controller 3 are placed, and holddown members 105 for pressing the unit cells 2 down to the cell container 4.

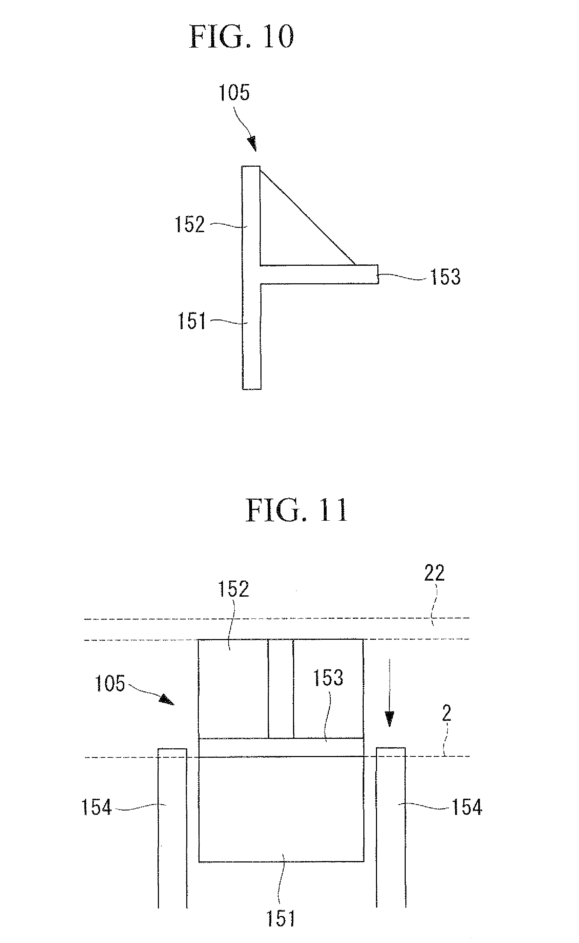

FIG. 10 is a partially enlarged view which illustrates the structure of the holddown member of FIG. 8. FIG. 11 is a schematic diagram which illustrates the structure of the vicinity of the holddown member of FIG. 8.
As shown in FIG. 8, the holddown member 105 is a member arranged between the upper case 22 and the lower case 21 to press the unit cell 2 down to the lower case 21 while the upper case 22 is being attached to the lower case 21.
As shown in FIG. 10 and FIG. 11, the holddown member 105 comprises an insertion portion 151 to be inserted in a clearance between the unit cell 2 and the lower case 21, an abutting portion 152 to be contacted to the bottom of the upper case 22, and a pressing portion 153 to be contacted to the unit cell 2.
Furthermore, guide rails 154 for guiding the holddown member 105 is provided on the wall surface of the lower case 21 where the holddown member 105 is arranged.

The insertion portion 151 and the abutting portion 152 consist of opposite ends of a plate-like member. The insertion portion 151 is a part on the unit cell 2 side from the pressing portion 153, and is a part to be inserted into the clearance between the unit cell 2 and the lower case 21. The abutting portion 152 is a part on the upper case 22 side from the pressing portion 153, and the top end thereof will be contacted to the upper case 22.

The pressing portion 153 is a plate-like member which projects at an approximately right angle to the plate-like member which constitutes the insertion portion 151 and the abutting portion 152. Between the pressing portion 153 and the abutting portion 152 is provided a rib for ensuring the rigidity.

The guide rails 154 are arranged at both sides of the holddown member 105, as well as projecting from the wall surface of the lower case 21 toward the unit cell 2 and extending from the upper case 22 side to the lower case 21 side. Furthermore, the guide rails 154 are configured so as not to interfere with the unit cell 2 to be placed in the unit cell chamber 32, or so as to support the unit cell 2.

There are no specific limitations on the side ribs 35 and the guide rails 154. For example, it is possible to separately provide them as mentioned above, or it is also possible to provide only the side ribs 35 by giving the function of the guide rails 154 to the side ribs 35.

According to the abovementioned structure, by fixing the upper case 22 to the lower case 21, the pressing portions 153 are pressed down to the lower case 21 via the abutting portions 152, and thereby the unit cells 2 are pressed down to the lower case 21. Therefore, the unit cells 2 can be more reliably kept from jumping up.
Furthermore, since the insertion portions 151 of the holddown members 105 are inserted into the clearances, the abutting portions 152 abut against a relatively rigid periphery portion of the upper case 22, that is to say, the vicinity of the reinforcing rib 44. Accordingly, the upper case 22 will be less likely deformed, and the unit cells 2 can be more reliably kept from jumping up even if vibrations or shocks are applied due to an external force acting on the battery pack mainframe.

### Third Embodiment

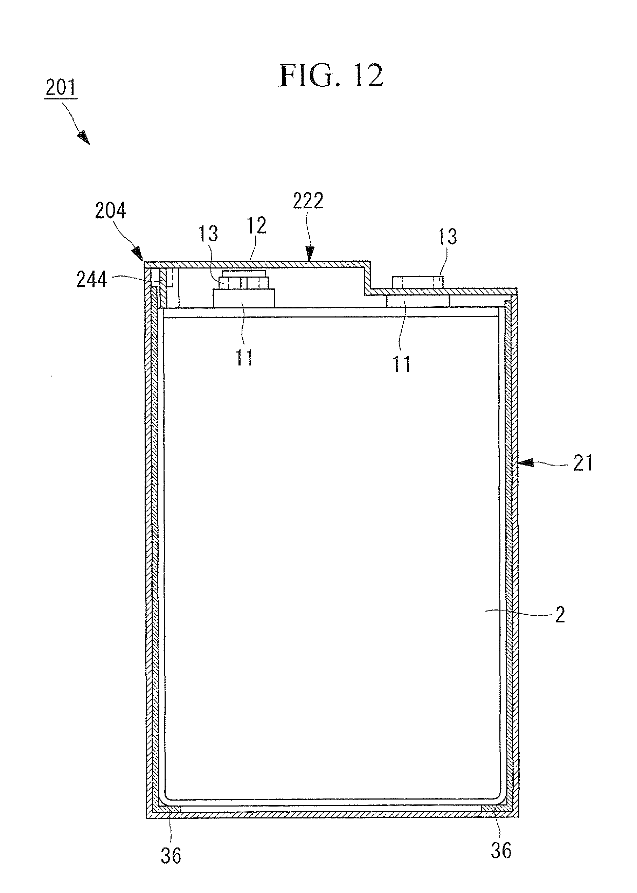

Next is a description of a third embodiment of the present invention with reference to FIG. 12 through FIG. 14.
The basic structure of the battery pack of this embodiment is the same as that of the first embodiment; however, this embodiment is different from the first embodiment regarding the structure of the upper case. In this embodiment, therefore, the description is made only for the structure of the upper case with reference to FIG. 12 through FIG. 14, and the description of other components is omitted.
FIG. 12 is a side cross-sectional view which illustrates the structure of the battery pack according to this embodiment.
The same reference symbols are used for components the same as those in the first embodiment, and the description thereof is omitted.

As shown in FIG. 12, the battery pack 201 comprises unit cells 2 such as lithium ion secondary cells, a controller 3 for controlling the unit cells 2, and a cell container 204 in which the unit cells 2 and the controller 3 are placed.
As shown in FIG. 12, the cell container 204 comprises a lower case 21 in which the unit cells 2 and the controller 3 are placed, and an upper case 222 which serves as a lid.

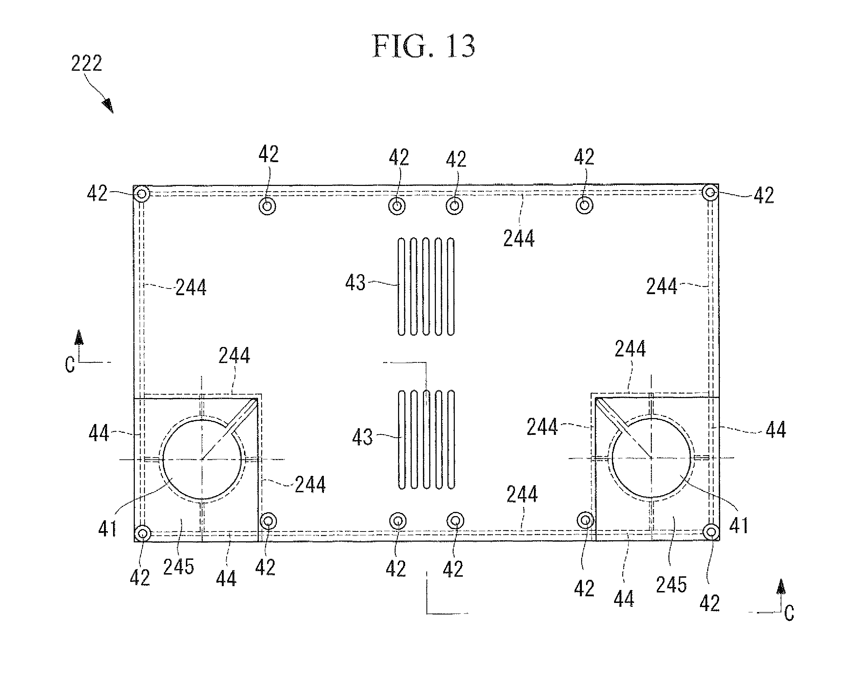

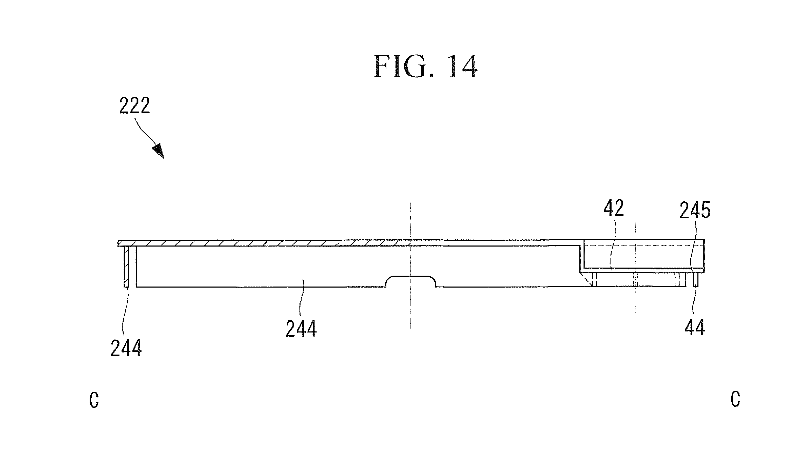

FIG. 13 is a top plan view which illustrates the structure of the upper case of the cell container of FIG. 12. FIG. 14 is a cross-sectional view which illustrates the structure of the upper case of FIG. 13, taken along the line C-C.
The upper case 222 is a lid which defines the external shape of the battery pack 201 by being attached to the lower case 21, and is formed of an insulative material such as a resin.

As shown in FIG. 12 through FIG. 14, the upper case 222 comprises: a pair of apertures 41 for exposing the electrode terminals 11 of the unit cells 2; screw holes 42 for inserting fastening members such as screws which fix the upper case 222 to the lower case 21; vent holes 43 for communicating between the controller chamber 33 and the outside of the case; and a reinforcing rib (raised portion) 244 for ensuring the rigidity of the upper case 222.
Furthermore, around the periphery of the aperture 41 is formed a stepped portion 245 which stands out to the lower case 21 side.

The reinforcing rib 244 is a rib formed in a belt-like shape around the periphery portion of the upper case 222 except for the stepped portions 245, and extending from the upper case 222 towards the lower case 21. The reinforcing rib 244 is configured so that the bottom end of the upper case 222 is contacted to the top face of the unit cells 2 when the upper case 222 is attached to the lower case 21.

According to the abovementioned structure, by fixing the upper case 222 to the lower case 21, the reinforcing rib 244 abuts against the unit cells 2, and thereby the unit cells 2 are pressed down to the lower case 21 side. Therefore, the unit cells 2 can be more reliably kept from jumping up.
Furthermore, since the upper case 222 comprises the reinforcing rib 244 which protrudes in a belt-like shape, the rigidity of the upper case 222 is improved as compared to the case without the reinforcing rib 244. Accordingly, the upper case 222 will be less likely deformed, and the unit cells 2 can be more reliably kept from jumping up even if vibrations or shocks are applied due to an external force acting on the battery pack mainframe.

### Fourth Embodiment

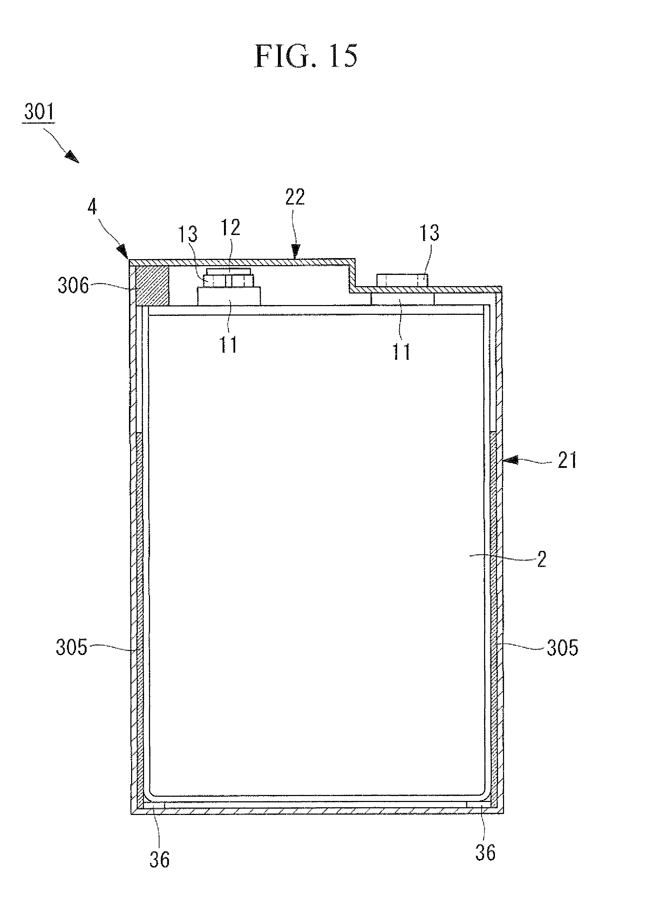

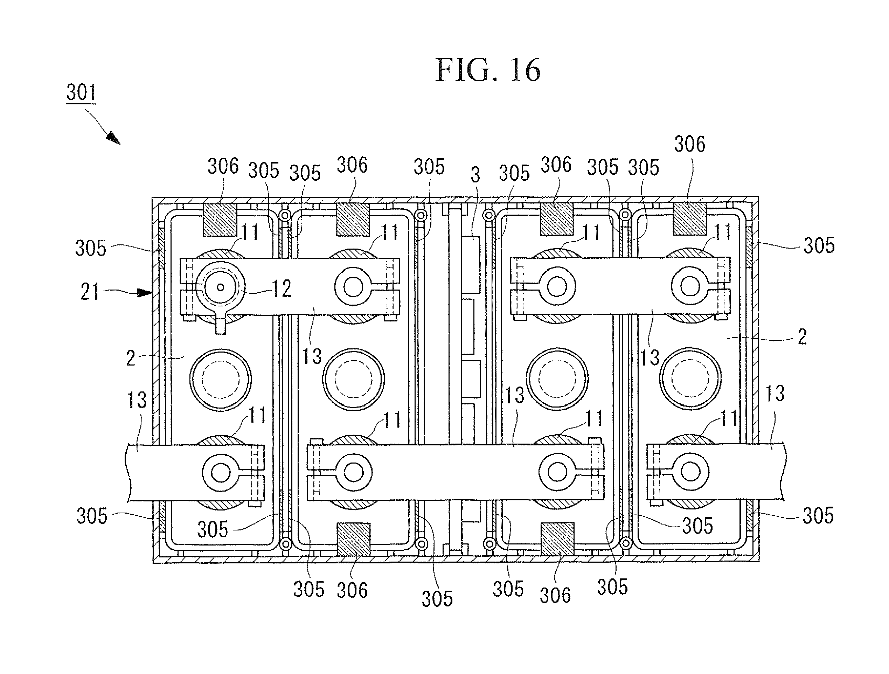

Next is a description of a fourth embodiment of the present invention with reference to FIG. 15 and FIG. 16.
The basic structure of the battery pack of this embodiment is the same as that of the first embodiment; however, this embodiment is different from the first embodiment regarding the inner structure of the battery pack. In this embodiment, therefore, the description is made only for the inner structure of the battery pack with reference to FIG. 15 and FIG. 16, and the description of other components is omitted.
FIG. 15 is a side cross-sectional view which illustrates the structure of the battery pack according to this embodiment. FIG. 16 is a top plan view which illustrates the inner structure of the battery pack of FIG. 15.
The same reference symbols are used for components the same as those in the first embodiment, and the description thereof is omitted.

As shown in FIG. 15 and FIG. 16, the battery pack 301 comprises unit cells 2 such as lithium ion secondary cells, a controller 3 for controlling the unit cells 2, a cell container 4 in which the unit cells 2 and the controller 3 are placed, and first damping sections 305 and second damping sections 306 for damping vibrations.

The first damping section 305 and the second damping section 306 are vibration/shock absorbers made of rubber, gel, or such material.
The first damping sections 305 are approximately plate-like members arranged in the clearances between the lower case 21 and the unit cells 2, and the clearances the between the wall portions 34 and the unit cells 2. The first damping section 305 is to alleviate vibrations and shocks transferred from the lower case 21 to the unit cells 2, and vibrations and shocks transferred from the wall portions 34 to the unit cells 2.

The second damping sections 306 are approximately rectangular members arranged between the upper case 22 and the unit cells 2. The second damping section 306 is to alleviate vibrations and shocks transferred from the upper case 22 to the unit cells 2.

According to the abovementioned structure, external vibrations or shocks applied to the battery pack 301 can be absorbed by the first damping sections 305 and the second damping sections 306. Accordingly, shocks and vibrations transferred to the unit cells 2 decrease, and thus the reliability of the battery pack 301 can be maintained.

### Fifth Embodiment

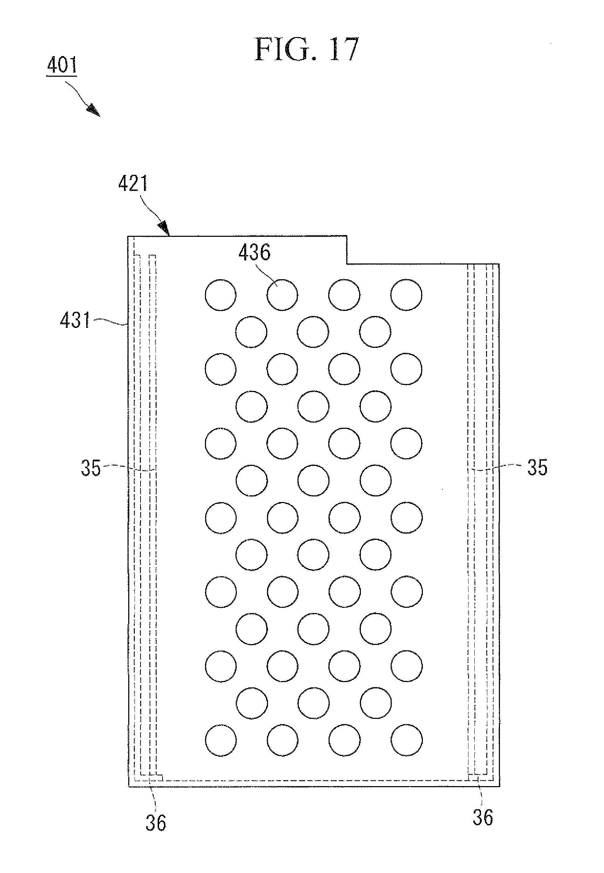

Next is a description of a fifth embodiment of the present invention with reference to FIG. 17 through FIG. 20.
The basic structure of the battery pack of this embodiment is the same as that of the first embodiment; however, this embodiment is different from the first embodiment regarding the structure of the cell container. In this embodiment, therefore, the description is made only for the structure of the cell container with reference to FIG. 17 through FIG. 20, and the description of other components is omitted.

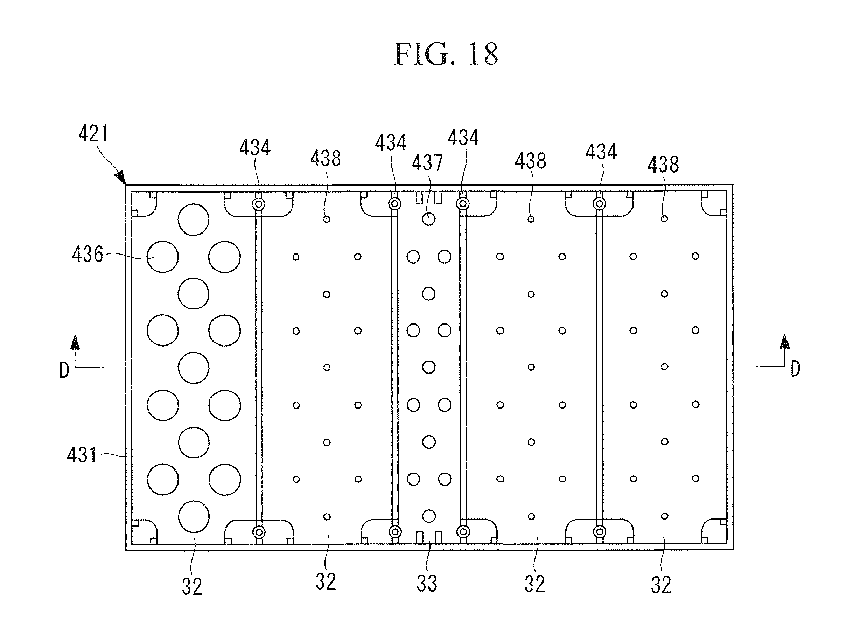

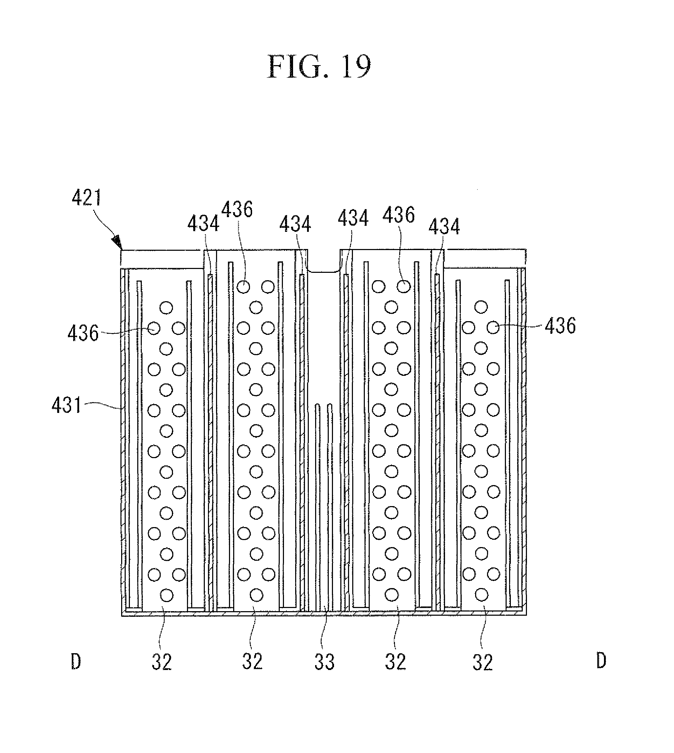

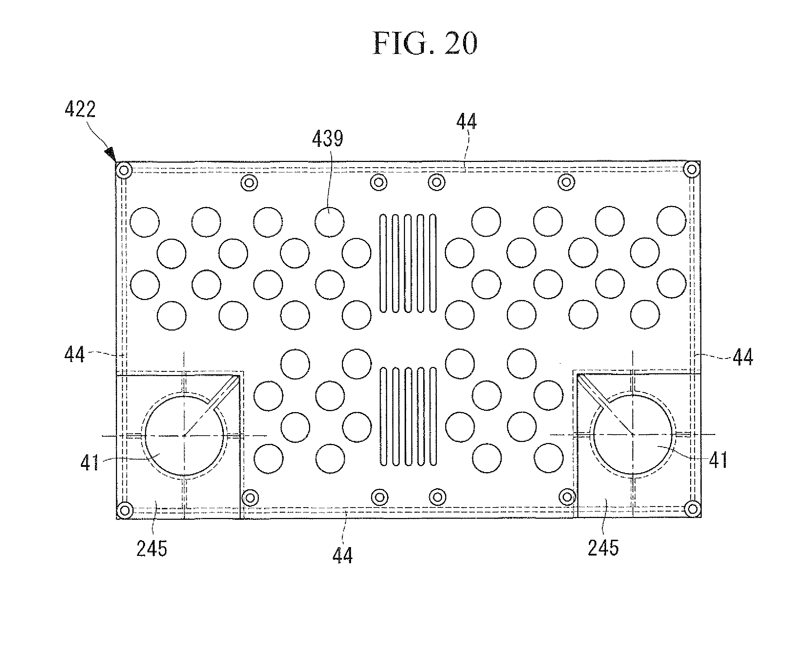

FIG. 17 is a side elevational view which illustrates the structure of the lower case in the battery pack according to this embodiment. FIG. 18 is a top plan view which illustrates the structure of the lower case of FIG. 17. FIG. 19 is a cross-sectional view which illustrates the structure of the lower case of FIG. 18, taken along the line D-D. FIG. 20 is a top plan view which illustrates the structure of the upper case in the battery pack of this embodiment.
The same reference symbols are used for components the same as those in the first embodiment, and the description thereof is omitted.

As shown in FIG. 17 through FIG. 19, the lower case 421 of the battery pack 401 comprises: a case mainframe (package) 431 which is in a rectangular tube shape with a closed bottom and an opened top; and wall portions 434 for partitioning the inside of the case mainframe 431 and defining the unit cell chambers 32 and the controller chamber 33.

As shown in FIG. 17 and FIG. 18, a plurality of first through holes (through holes) 436 are provided in the side walls of the lower case 421, the wall portions 434, and a bottom panel which constitutes one of the unit cell chambers 32 in the lower case 421, that is, either one of the outermost unit cell chambers 32 in this embodiment. Meanwhile, a plurality of second through holes (through holes) 437 having a smaller diameter than that of the first through hole 436 are provided in the bottom panel which constitutes the controller chamber 33. Furthermore, third through holes (through holes) 438 having a smaller diameter than that of the second through hole 437 are provided in the rest of the bottom panels which constitute the other unit cell chambers 32 in the lower case 421.

As shown in FIG. 20, a plurality of fourth through holes (through holes) 439 are provided in the area of the upper case 422 except for the stepped portions 245.
The first through holes 436, the second through holes 437, the third through holes 438, and the fourth through holes 439 may be arranged in zigzag shapes as shown in FIG. 17 through FIG. 20, or may also be arranged in other patterns without any specific limitations.

According to the abovementioned structure, air ventilation can be secured between the clearances and the outside of the upper case 422 and the lower case 421 via the first through holes 436, the second through holes 437, the third through holes 438, and the fourth through holes 439. Therefore, heat generated in the unit cells 2 can more readily radiate as compared to the case without the through holes 436.

### Sixth Embodiment

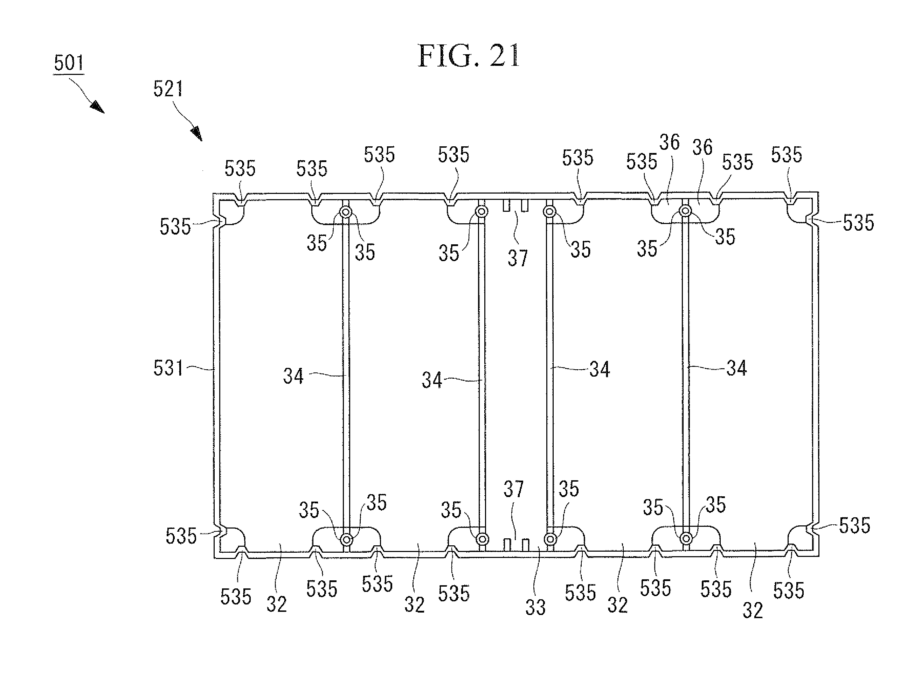

Next is a description of a sixth embodiment of the present invention with reference to FIG. 21.
The basic structure of the battery pack of this embodiment is the same as that of the first embodiment; however, this embodiment is different from the first embodiment regarding the structure of the cell container. In this embodiment, therefore, the description is made only for the structure of the cell container with reference to FIG. 21, and the description of other components is omitted.
FIG. 21 is a top plan view which illustrates the structure of the lower case in the battery pack according to this embodiment.
The same reference symbols are used for components the same as those in the first embodiment, and the description thereof is omitted.

As shown in FIG. 21, the lower case 521 of the battery pack 501 comprises: a case mainframe (package) 531 which is in a rectangular tube shape with a closed bottom and an opened top; and wall portions 34 for partitioning the inside of the case mainframe 531 and defining the unit cell chambers 32 and the controller chamber 33.

The wall of the case mainframe 531 which constitute the unit cell chambers 32 comprises side ribs (support projections) 535 for supporting the unit cells 2 from the side.
The side ribs 535 are formed by folding the wall of the case mainframe 531. These side ribs 535 project toward the unit cells 2 and extend in the vertical direction.
According to the abovementioned structure, the rigidity of the lower case 521 can be ensured.

The position to arrange the side ribs 535 is not specifically limited as long as the unit cells 2 can be supported. For example, as mentioned above, it is possible to arrange the side ribs 535 on the case mainframe 531 in the vicinities of the corners.

### Seventh Embodiment

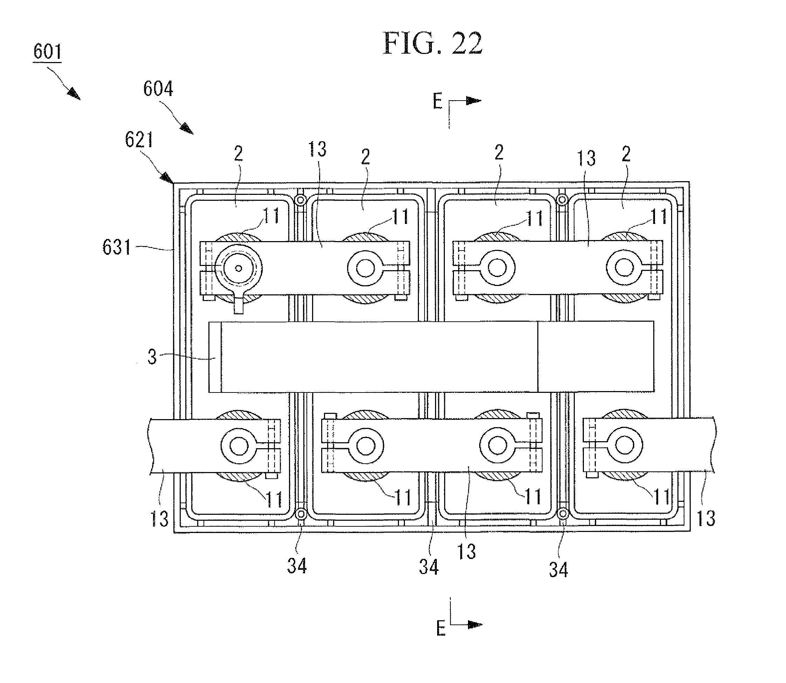

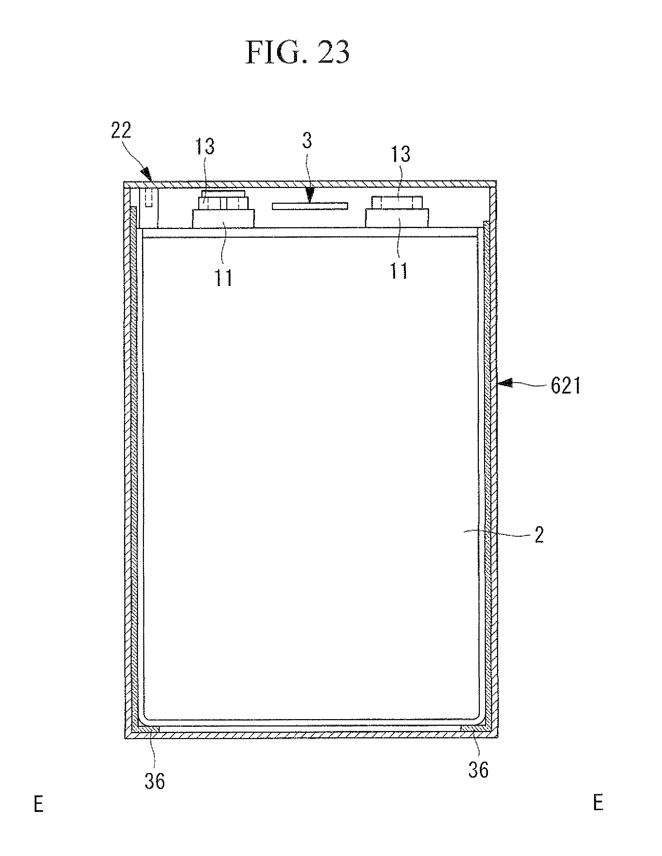

Next is a description of a seventh embodiment of the present invention with reference to FIG. 22 and FIG. 23.
The basic structure of the battery pack of this embodiment is the same as that of the first embodiment; however, this embodiment is different from the first embodiment regarding the inner structure of the battery pack. In this embodiment, therefore, the description is made only for the inner structure of the battery pack with reference to FIG. 22 and FIG. 23, and the description of other components is omitted.
FIG. 22 is a top plan view which illustrates the inner structure of the battery pack according to this embodiment. FIG. 23 is a cross-sectional view which illustrates the inner structure of the battery pack of FIG. 22, taken along the line E-E.
The same reference symbols are used for components the same as those in the first embodiment, and the description thereof is omitted.

As shown in FIG. 22 and FIG. 23, the battery pack 601 comprises unit cells 2 such as lithium ion secondary cells, a controller 3 for controlling the unit cells 2, and a cell container 604 in which the unit cells 2 and the controller 3 are placed.
As shown in FIG. 22 and FIG. 23, the cell container 604 comprises a lower case 621 in which the unit cells 2 and the controller 3 are placed, and an upper case 22 which serves as a lid.

The lower case 621 comprises: a case mainframe (package) 631 which is in a rectangular tube shape with a closed bottom and an opened top; and wall portions 34 for partitioning the inside of the case mainframe 631 and defining the unit cell chambers 32 in which the unit cells 2 are placed.

The controller 3 is arranged in a space between the upper case 22 and the unit cells 2 placed in the unit cell chambers 32 so that the controller 3 can extend in the direction along which the unit cells 2 are arranged.
According to the abovementioned structure, it is not necessary to separately secure the space to store the controller 3. Therefore, the size of the cell container 604 can be reduced.

## Claims

1. A cell container comprising:
an insulative case in which a plurality of unit cells are placed side by side;
an insulative wall portion for partitioning between the plurality of unit cells; and
support projections projecting from at least either one of said case or said wall portion toward said unit cells to support the unit cells.

2. A cell container according to claim 1, further comprising a controller for controlling at least the voltage of the plurality of unit cells at the time of charging or discharging,
wherein the controller is arranged between the plurality of unit cells while being inserted in a setup section that is partitioned from said unit cells by the wall portions.

3. A cell container according to either one of claim 1 and claim 2, wherein through holes are provided at least in said case, for communicating between the outside of the case and a clearances formed between said unit cell and said case or said wall portion.

4. A cell container according to any one of claim 1 through claim 3, wherein said case comprises: a lower case into which the plurality of unit cells are placed from its opening; and an upper case which serves as a lid to close the opening.

5. A cell container according to claim 4, further comprising a holddown member which comprises: an insertion portion to be inserted in a clearance formed between the case and the unit cell; an abutting portion which abuts against the upper case being fixed to the lower case; and a pressing portion to be pressed against the surface of said unit cell on the upper case side.

6. A cell container according to claim 4, wherein the surface of said upper case on the lower case side is provided with a raised portion which protrudes in a belt-like shape toward the unit cells placed in said lower case and which abuts against said unit cells.

7. A battery pack comprising:
the cell container according to any one of claim 1 through claim 6, and
a plurality of unit cells placed in the cell container.
